# EUROPEAN PATENT SPECIFICATION

(11) **EP 2 202 837 B1**
(45) Date of publication and mention of the grant of the patent: **18.06.2014**
(21) Application number: 08791456.0
(22) Date of filing: 23.07.2008
(51) Int. Cl.: H01M 14/00, H01L 31/04

(54) **DYE-SENSITIZED SOLAR CELL**
FARBSTOFFSENSIBILISIERTE SOLARZELLE
CELLULE SOLAIRE SENSIBILISÉE PAR COLORANT

(30) Priority: 06.08.2007 JP 2007203992; 06.08.2007 JP 2007203993
(43) Date of publication of application: 30.06.2010
(73) Proprietor: Toyo Seikan Kaisha, Ltd., Shinagawa-ku Tokyo 141-8640 (JP)
(72) Inventor: YAMAMOTO, Naotsugu, Yokohama-shi Kanagawa 240-0062 (JP); SATO, Kazuhiro, Yokohama-shi Kanagawa 240-0062 (JP)
(74) Representative: Manley, Nicholas Michael
(86) International application number: PCT/JP2008/063199
(87) International publication number: WO 2009/019983

(56) References cited:
- EP-A1- 1 589 548
- EP-A1- 1 619 700
- JP-A- 2000 106 222
- JP-A- 2001 196 104
- JP-A- 2007 063 266
- JP-A- 2007 115 602
- US-A1- 2007 102 676

## Description

### Technical Field

This invention relates to a dye-sensitized solar cell equipped with an electrode substrate that has a semiconductor porous layer carrying a sensitizing dye.

### Background Art:

Solar power generation has now been greatly expected from the standpoint of environmental problems on a global scale and depletion of fossil energy resources, and single crystalline and polycrystalline silicon photoelectric converter elements have been put into practical use as solar cells. However, the solar cells of this kind are expensive and are accompanied by a problem of supplying the starting silicon material. Therefore, it has been desired to put the solar cells into practical use by using materials other than silicon.

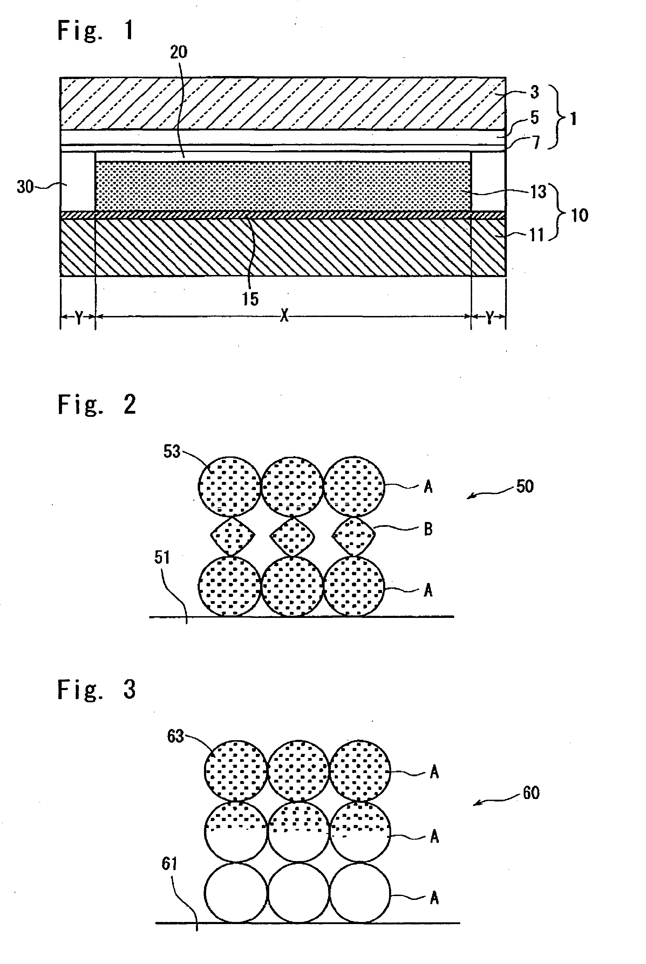

From the above point of view in recent years, a dye-sensitized solar cell is drawing attention as a solar cell using materials other than silicon. A dye-sensitized solar cell can be represented by the one having a structure as shown in Fig. 1.

That is, the cell has a transparent electrode substrate (anode substrate) 1 and a metal electrode substrate (cathode substrate) 10.

The transparent electrode substrate 1 has a transparent conducting film 5 (e.g., ITO film) formed on a transparent substrate 3 such as a transparent glass or a transparent resin film and, further, has, as required, a deposited film of platinum or the like as an electron-reducing conducting layer 7. The metal electrode substrate 10, on the other hand, has a metal substrate 11 on which a dye-sensitized semiconductor porous layer 13 is formed via a reverse-electron blocking layer 15 that is formed as required. The transparent electrode substrate 1 and the metal electrode substrate 10 are opposed to each other holding an electrolyte layer 20 therebetween, and the circumferential portions of the transparent electrode substrate 1 and the metal electrode substrate 10 are sealed with a sealing member 30 so that the electrolyte layer 20 will not leak out. That is, a power-generating region X is the region where the metal electrode substrate 10 and the transparent electrode substrate 1 are opposed to each other holding the dye-sensitizing semiconductor porous layer 13 and the electrolyte layer 20 therebetween, and a sealing region Y is the region which is sealed with the sealing member 30.

In the dye-sensitized solar cell of this structure, if visible light falls on the side of the transparent electrode substrate 1, the dye in the dye-sensitized semiconductor porous layer 13 is excited and is transited from the ground state to the excited state. Electrons of the excited dye are injected into the conduction band of the porous layer 13, and migrate to the transparent electrode substrate 1 through an external circuit (not shown). The electrons that have migrated to the transparent electrode substrate 1 return back to the dye being carried by ions in the electrolyte layer 20. The power generation mechanism of the dye-sensitized solar cell is different from that of the pn-junction photoelectric converter element; i.e., trapping of light and conduction of electrons occur in separate places very like that of a photoelectric conversion process of plants.

In the dye-sensitized solar cell of the above structure, the semiconductor porous layer 13 carrying the dye can be formed directly on the metal substrate 11 of a low resistance to avoid a decrease in the conversion efficiency. In case the cell is fabricated in a large size, further, the internal resistance (curvature factor, fill factor; FF) can be suppressed from increasing, which is an advantage.

There has, further, been known a dye-sensitized solar cell of a structure quite contrary to the above one, i.e., concretely of a structure in which the dye-sensitized semiconductor porous layer 13 in Fig. 1 is formed on the transparent conducting film 5 (or the electron-reducing layer 7) of the transparent electrode substrate 1, and the metal electrode substrate 10 is opposed thereto holding the electrolyte layer 20 therebetween. In the solar cell of this type, the transparent electrode substrate 1 serves as the cathode substrate, the metal electrode substrate 10 (metal substrate 11) serves as the anode substrate, and electric power is generated upon irradiating the side of the cathode substrate with light.

In the above dye-sensitized solar cells, the dye-sensitized semiconductor porous layer 13 is formed by applying a paste of fine semiconductor particles such as of titanium oxide on a predetermined substrate, forming a porous semiconductor layer of titanium oxide by firing, applying a dye solution thereon so that the dye is absorbed by the porous layer, and removing the solvent of the dye solution either when the dye-sensitized semiconductor porous layer 13 is on the side of the anode substrate or the cathode substrate (see patent document 1).

Further, there have been known methods of forming the porous layer of a titanium oxide semiconductor by the sol-gel method (patent documents 2 and 3). There has, further, been proposed a method of forming a porous layer in which when a pore radius therein has a predetermined value, a change in the pore volume relative to the pore radius is not less than 20 mm³/nm (patent document 4).

In forming the semiconductor porous layer as described above, further, a paste of fine semiconductor particles is applied, usually, by such means as spin coating, dye coating or screen printing. From the standpoint of increasing the areas, however, the screen printing is most desired. Industrially, therefore, the screen printing has been generally used. The paste for the screen printing used here (hereinafter simply referred to as semiconductor paste) is the one obtained by dispersing fine semiconductor particles and a resin serving as a binder in an organic solvent. As the resin, here, an ethyl cellulose is used from such a standpoint that it holds the fine semiconductor particles without causing the particles to be aggregated, it stably bonds and holds the fine semiconductor particles even in a state where the coating of the paste is dried and it can be reliably removed upon firing. As the solvent, further, a terpineol is used from such a standpoint that it is inert to the fine semiconductor particles and it permits the fine semiconductor particles to be homogeneously dispersed without impairing the properties thereof (patent documents 5 and 6).

Patent document 1: JP-A-2002-298646
Patent document 2: Japanese Patent No. 2664194
Patent document 3: JP-B-8-15097
Patent document 4: JP-A-2003-234134
Patent document 5: JP-A-2004-153030
Patent document 6: JP-A-2007-26994

EP 1 589 548 A1 discloses a method of producing a porous semiconductor film and the film resulting from such production. It furthermore relates to an electronic device incorporating such film and to potential uses of such film.

Photoactive layers that contain macroparticles, as well as related photovoltaic cells, systems and method are disclosed in EP 1 619 700 A1. The composition comprises macroparticles of a first semiconductor material, the macroparticles having an average particle size of at least about 100 nanameters; and nanoparticles of a second semiconductor material, the nanoparticles having an average size of at most about 50 nm. First and second semiconductor materials has the formula MₓO_{y}, Where x and y are greater than zero. M is selected from the group consisting of titanium, zirconium, zinc, tungsten, niobium, lanthanum, tantalum, terbium and tin.

JP 2000 106222A discloses a semiconductor film for a photoelectric conversion element and photo-electrochemical cell in which large-size semiconductor fine particles (A) and small-size semiconductor fine particles (B) are contained, and the difference between average particle sizes of them is 5 nm or more. The average particle size of the semiconductor fine particles (A) is 10 nm or more but 300 nm or less, and the average particle size of the semiconductor fine particles (B) is 10 nm or less. The ratio of the volume occupied by the semiconductor fine particles (B) is 0.1-30% with respect to the total volume. The semiconductor is titanium oxide. The temperature of heat treatment of a semiconductor film is 150-350°C, and a colouring matter used in colouring matter sensitizing is a metal complex and/or polymethine colouring matter. A conductive carrier is a polymer film on the surface of which a conductive layer is formed.

### Disclosure of the Invention:

### Problems that the Invention is to Solve:

Generally, however, the dye-sensitized solar cells have low conversion efficiencies and improvements have been desired. For example, the solar cells equipped with an electrode substrate having an oxide semiconductor porous layer produced by the methods disclosed in the patent documents 1 to 3, have low conversion efficiencies.

The oxide semiconductor porous layer proposed by the patent document 4 has pores of sizes that can be adsorbed by the dye in a number adjusted to lie in a predetermined range, and the dye-sensitized solar cell equipped with such an oxide semiconductor porous layer has a higher conversion efficiency than those proposed by the patent documents 1 to 3. However, the conversion efficiency is not still sufficient, and a dye-sensitized solar cell having a further increased conversion efficiency has now been desired.

Further, a known semiconductor paste does not cause much problem when it is to be applied onto the portions of relatively small areas. When applied to the portions of large areas, however, the thickness loses uniformity due to slacking. Therefore, improvements have been desired from the standpoint of forming electrode substrates of large areas by screen printing.

It is, therefore, an object of the present invention to provide an electrode substrate for a dye-sensitized solar cell having a dye-sensitized semiconductor porous layer of a structure capable of improving conversion efficiency.

Another object of the present invention is to provide a method of producing an electrode substrate equipped with a semiconductor porous layer of a large area without slacking.

A further object of the present invention is to provide a semiconductor paste that can be favorably used for forming a semiconductor porous layer of a large area.

### Means for Solving the Problems:

The present inventors have keenly studied the above problems, have newly discovered that in the conventional dye-sensitized solar cells, the sensitizing dye is much distributed in the surface portions of the oxide semiconductor porous layer but is little distributed in the interior thereof (on the side of the transparent electrode substrate) making it difficult to attain a high conversion efficiency, and that a semiconductor paste containing two kinds of ethyl celluloses having different viscosities as binder components can be excellently applied and is suited for forming a uniform layer even when it is applied onto the portions of large areas, and have completed the invention based on the above discovery.

According to the present invention, there is provided an electrode substrate for a dye-sensitized solar cell equipped with a semiconductor porous layer that carries a sensitizing dye, wherein:
said semiconductor porous layer includes a mixture of titanium dioxide semiconductor fine particles (A) having spherical shapes, i.e. shapes having no corners for forming planes and titanium dioxide semiconductor fine particles (B) having irregular shapes and particle diameters smaller than those of said fine particles (A), and has a voidage of not less than 60%, and in which a maximum peak of pore volume in said semiconductor porous layer as measured by a BET method is present in a region of pore diameters of not smaller than 30 nm;
said titanium dioxide semiconductor fine particles (A) have particle diameters in a range of 5 to 100 nm, and said titanium dioxide semiconductor fine particles (B) have particle diameters in a range of 1 to 80 nm; and
said semiconductor porous layer contains said titanium dioxide semiconductor fine particles (A) and said titanium dioxide semiconductor fine particles (B) at a weight ratio A/B of 10/90 to 90/10.
According to the present invention, further, there is provided a dye-sensitized solar cell including the above electrode substrate and an opposing electrode opposed to the side of the semiconductor porous layer of the electrode substrate holding an electrolyte layer therebetween.

According to the present invention, there is, further, provided a method of producing an electrode substrate for a dye-sensitized solar cell, including:
a step of preparing a semiconductor paste by dispersing oxide semiconductor fine particles in an organic solvent;
a step of applying said semiconductor paste onto one surface of the electrode substrate;
a step of forming a semiconductor porous layer by firing a layer of the semiconductor paste that is applied; and
a step of having a dye carried by said semiconductor porous layer; wherein
said semiconductor paste that is used is obtained by mixing together titanium dioxide semiconductor fine particles (A) having spherical shapes and titanium dioxide semiconductor fine particles (B) having irregular shapes and particle diameters smaller than those of said titanium dioxide semiconductor fine particles (A) in an organic solvent, the organic solvent containing terpineol and two kinds of ethyl celluloses that exhibit different viscosities when dissolved in a solvent; wherein:
   said titanium dioxide semiconductor fine particles (A) have particle diameters in a range of 5 to 100nm, and said titanium dioxide semiconductor fine particles (B) have particle diameters in a range of 1 to 80 nm; and
   said paste contains said titanium dioxide semiconductor fine particles (A) and said titanium dioxide semiconductor fine particles (B) at a weight ratio A/B of 10/90 to 90/10.

In the method of producing the electrode substrate, it is desired that:
(1) The semiconductor paste contains the oxide semiconductor fine particles (A) and the oxide semiconductor fine particles (B) in a total amount of 5 to 60% by weight, contains the terpineol in an amount of 10 to 90% by weight, and contains the two kinds of ethyl celluloses in a total amount of 5 to 60% by weight;
(2) The two kinds of ethyl celluloses that are used are a low-viscosity ethyl cellulose having a viscosity of 5 to 15 cP and a high-viscosity ethyl cellulose having a viscosity of 30 to 50 cP as measured as solutions of a solid component concentration thereof of 10% by weight at 25°C with toluene as a solvent;
(3) The semiconductor paste contains the low-viscosity ethyl cellulose (ES¹) and the high-viscosity ethyl cellulose (ES²) at a weight ratio ES¹/ES² of 51/49 to 80/20.

### Effects of the Invention:

In the electrode substrate of the present invention, an important feature resides in that the semiconductor porous layer sensitized with the dye comprises the two kinds of oxide semiconductor fine particles having different shapes and different sizes or, concretely, comprises oxide semiconductor fine particles (A) having spherical shapes and oxide semiconductor fine particles (B) having irregular shapes and particle diameters smaller than those of the spherical oxide semiconductor fine particles. That is, the semiconductor porous layer comprising the two kinds of oxide semiconductor fine particles (A) and (B) possesses much macro pores which are capable of effectively adsorbing and carrying the sensitizing dye, and in which a maximum peak of pore volume is present in a region of pore diameters of not smaller than 30 nm as measured by the BET method (nitrogen adsorption method) featuring not only a large surface area but also a voidage of not less than 60%. As a result, the sensitizing dye does not stay in the surface portions only of the semiconductor porous layer but deeply infiltrates into the interior thereof (toward the side of the transparent electrode substrate) so as to be homogeneously distributed. Besides, light falling on the side of the transparent electrode substrate for generating power scatters to spread over the whole oxide semiconductor porous layer to ensure a conversion efficiency higher than that of the conventional photo-sensitized solar cells.

As will be learned from the experimental results of Examples appearing later, for example, a conversion efficiency of 5% is attained by a dye-sensitized solar cell of Example 1 in which the semiconductor porous layer comprises the two kinds of titanium dioxide fine particles (A) and (B) as described above. On the other hand, the conversion efficiency is 3% in the case of Comparative Example 1 in which the oxide semiconductor porous layer comprises the spherical titanium oxide fine particles (A) only, and is considerably lower than that of Example 1 of the present invention.

The semiconductor porous layer comprising the above two kinds of oxide semiconductor fine particles is produced by applying a semiconductor paste obtained by dispersing the above oxide semiconductor fine particles in an organic solvent, onto an electrode substrate, e.g., onto a metal electrode substrate 10 (or a transparent electrode substrate 1) in Fig. 1, firing (baking) the applied layer, and having a dye carried by the thus formed semiconductor porous layer. When the electrode substrate is to be produced as described above according to the present invention, it is desired that the semiconductor paste used for forming the semiconductor porous layer contains, as binder components, two kinds of ethyl celluloses that exhibit different viscosities when dissolved in a solvent. When the above semiconductor paste is applied, a coating (applied layer) can be formed on a portion of a large area maintaining a more uniform thickness without slacking than that of when the semiconductor paste is applied by screen printing. It is, therefore, made possible to form the above semiconductor porous layer of a large area maintaining a uniform thickness.

Conventional semiconductor pastes, too, use the ethyl cellulose as a binder. However, due to its low viscosity, the low-viscosity ethyl cellulose adapted to being applied by screen printing tends to be slackened when it is applied onto a large area. Therefore, the thickness of the coating loses stability, the thickness of the finally formed semiconductor porous layer loses uniformity, and stable properties cannot be attained.

According to the present invention which uses a high-viscosity ethyl cellulose in addition to the low-viscosity ethyl cellulose, however, it is made possible to form a coating of a uniform thickness without impairing binder properties of ethyl celluloses, without deteriorating dispersion property in the solvent, and effectively preventing the slacking even when a coating having a large area is formed.

The above semiconductor paste is not limited to forming the above semiconductor porous layer only but can also be used for forming a known semiconductor porous layer by, for example, dispersing only one kind of oxide semiconductor fine particles in the paste. In this case, too, it is allowed to form a semiconductor porous layer of a large area having a uniform thickness.

### Brief Description of the Drawings:

[Fig. 1] is a view schematically illustrating a structure of a dye-sensitized solar cell equipped with an electrode substrate having a semiconductor porous layer of the present invention.
[Fig. 2] is a partial sectional view illustrating, on an enlarged scale, a dye-sensitized semiconductor porous layer formed in the electrode substrate of the present invention.
[Fig. 3] is a partial sectional view illustrating, on an enlarged scale, a dye-sensitized semiconductor porous layer possessed by a conventional dye-sensitized solar cell.

### Best Mode for Carrying Out the Invention:

### <Semiconductor porous layer>

Referring to Fig. 2 which illustrates, on an enlarged scale, a portion of the semiconductor porous layer formed on the electrode substrate of the invention, the semiconductor porous layer 50 is formed on the surface of the electrode substrate 51 (above metal electrode substrate 10 or transparent electrode substrate 1). In the invention, the semiconductor porous layer 50 comprises oxide semiconductor fine particles A (spherical semiconductor fine particles A) and oxide semiconductor fine particles B having irregular shape (irregular semiconductor fine particles B), and a sensitizing dye 53 is carried on the surfaces of the particles.

In the invention, spherical particles are the particles having no corners for forming planes as observed by using an electron microscope such as SEM or TEM. So far as no corner is observed, the spherical particles include not only truly spherical particles but also particles having an oval shape in cross section, and stand for the particles of which large diameters are not more than 10 times as great as the small diameters thereof. irregular particles are the ball-like particles of which particular shapes cannot be recognized by using the above electron microscope but of which edge lines or corners representing boundaries among planes can be observed, and which roughly have polygonal shapes, and stand for the particles of which large diameters are not more than 10 times as great as the small diameters thereof like the spherical particles. In the spherical particles and irregular particles, further, the particle size (particle diameter) stands for a maximum diameter.

In the invention, the spherical semiconductor fine particles A forming the above semiconductor porous layer 50 have particle diameters larger than those of the irregular semiconductor fine particles B. The semiconductor porous layer 50 comprising the two kinds of oxide semiconductor porous fine particles having different sizes and shapes, has a maximum peak of pore volume in a region of pore diameters of not smaller than 30 nm and, preferably, in a region of pore diameters of 50 to 150 nm as measured by the BET method (nitrogen adsorption method), and has a voidage adjusted to be not less than 60% and, preferably, to lie in a range of 60 to 80%. Namely, in the invention, the semiconductor porous layer 50 contains much macro pores of such sizes that easily adsorbs the dye 53, has large surface areas as well as large voidage enabling, as will be learned from Fig. 2, the dye 53 not only to stay in the surface portions of the semiconductor porous layer 50 but also to infiltrate into the interior thereof and carried therein homogeneously. Besides, large voids enable light that is falling for generating power to scatter and spread all over the semiconductor porous layer 50 ensuring a high conversion efficiency.

Fig. 3, for example, is a view schematically illustrating, on an enlarged scale, the structure of a semiconductor porous layer 60 provided in an electrode substrate 61 of a conventional dye-sensitized solar cell. The semiconductor porous layer 60 comprises oxide semiconductor fine particles of the same shape and of nearly the same size and, therefore, has small pore sizes without forming macro pores unlike that of the present invention. If a pore volume is measured by the BET method, for example, a pore volume representing a maximum peak is present in a portion where the pore diameter is smaller than 30 nm, and the voidage is smaller than 60%, either. Therefore, the dye 63 is carried being almost all distributed in the surface portions only without deeply infiltrating into the interior. As a result, a high conversion efficiency is not obtained.

In the semiconductor porous layer 50 of the structure shown in Fig. 2 of the invention, further, the pore volume representing a maximum peak in a region of pore diameters of not smaller than 30 nm, is in a range of not smaller than 1.0 cc/g, desirably, not smaller than 1.5 cc/g and, most desirably, not smaller than 2.0 cc/g as measured by the BET method. A large value of pore volume means that the two kinds of particles A and B are homogeneously dispersed together ensuring a high conversion efficiency maintaining stability without fluctuation.

In order to ensure the above pore volume and voidage and, further, to increase the surface area, it is a prerequisite that the spherical semiconductor fine particles A have particle diameters larger than those of the irregular semiconductor fine particles B. It is, further, desired that the spherical semiconductor fine particles A have particle diameters in a range of 5 to 100 nm and, particularly, 15 to 60 nm while the irregular semiconductor fine particles B have particle diameters in a range of 1 to 80 nm and, particularly, 5 to 30 nm. Most desirably, the spherical particles A have particle diameters which are larger than the particle diameters of the irregular particles B by an average of 10 nm or more. That is, the larger the difference in the particle diameter between the two kinds of the particles, the more easy to form the structure having macro pores as shown in Fig. 2.

The particle diameters of the particles can be found by using an electron microscope while effecting the sputtering based on a platinum spluttering or the like.

There is no particular limitation on the presence ratio (A/B) of the spherical semiconductor fine particles A and the irregular semiconductor fine particles B so far as the above pore volume and the voidage are obtained. Usually, however, the ratio A/B (weight ratio) is in a range of 10/90 to 90/10 and, particularly, 30/70 to 70/30.

The spherical or polyhedral oxide semiconductor fine particles A and B may be the particles of the known oxide semiconductors. As such oxide semiconductors, there can be exemplified oxides of metals such as titanium, tin, zinc, zirconium, hafnium, strontium, tantalum, chromium, molybdenum or tungsten, or a composite oxide containing these metals, such as perovskite type oxides like SrTiO₃ or CaTiO₃. From the standpoint of attaining particularly high conversion efficiency, however, it is most desired to use titanium dioxide (particularly, anatase type or brookite type).

The semiconductor porous layer 50 comprising the above spherical and amorphous particles A and B can be formed by applying a semiconductor paste containing the above particles A and B onto the electrode substrate 51 by screen printing, spray coating or die coating, followed drying and baking. The semiconductor porous layer 3 has a thickness which is, usually, about 5 to about 20 µm, and the weight of the oxide semiconductors (total weight of the particles A and B) is about 0.001 to about 0.005 g/cm².

The shapes of the oxide semiconductor fine particles A and B have been known, and can be prepared by suitably changing the conditions for producing the oxide semiconductor fine particles. Both the spherical oxide semiconductor fine particles A and the amorphous oxide semiconductor fine particles B have been placed in the market. For instance, the spherical titanium dioxide particles have been placed in the market by Ishihara Sangyo Co. in the trade name of ST Series while the amorphous titanium dioxide particles have been placed in the market by Teika Co. in the trade name of AMT Series. Particle size profiles of the particles can be adjusted to lie in the above ranges of particle diameters by using, for example, an electro-forming sieve.

### <Semiconductor paste>

The semiconductor fine particles, i.e., the oxide semiconductor fine particles A and B used for forming the semiconductor porous layer 50, are dispersed in an organic solvent and to which binder components are, further, added to adjust the viscosity to lie in a predetermined range suited for being applied. When it is attempted to form the semiconductor porous layer 50 of a large area by screen printing, in particular, it is desired to use a semiconductor paste that is described below.

First, the oxide semiconductor fine particles A and B are contained in the semiconductor paste at solid component concentrations of about 5 to about 60% by weight at the above-mentioned weight ratio. As the organic solvent, there can be used various kinds of alcohols, i.e., lower alcohols such as methanol, ethanol, isopropanol, n-butanol, sec-butanol and t-butanol; glycols such as propylene glycol, hexylene glycol and butylene glycol; and terpineol. Among them, the terpineol that is generally used is most desired.

The terpineol (C₁₀H₁₈O) is an unsaturated alcohol formed by removing a water molecule from a 1,8-terpin, and there have been known three types of them, i.e., α-, β- and γ-types. Any one of them can be used. Usually, however, there is preferably used an α-terpineol (Bp: 219 to 221 °C) or a mixture chiefly comprising the α-terpineol and to which other kind of terpineol such as β-terpineol is mixed (a product placed in the market is, usually, a mixture).

That is, the terpineol is a relatively viscous liquid in which oxide semiconductor fine particles as represented by the above titanium dioxide fine particles can be dispersed easily and homogeneously. Upon heating, further, the terpineol can be easily volatilized without adversely affecting semiconducting properties of the oxide semiconductor fine particles.

In the semiconductor paste preferably used in the invention, the organic solvent and, particularly, the terpineol is contained in the semiconductor paste in an amount of 10 to 90% by weight and, particularly, 40 to 80% by weight. If the amount thereof lies outside the above range, a balance is lost relative to the oxide semiconductor fine particles such as the titanium dioxide fine particles or the binder components that will be described later, inviting such an inconvenience that the oxide semiconductor fine particles cannot be homogeneously dispersed or the semiconductor paste cannot be favorably applied.

As the binder components in the semiconductor paste, there are usually used cellulose-type polymers such as ethyl celluloses. In the present invention, however, it is desired to use, as binder components, two kinds of ethyl celluloses, i.e., a low-viscosity ethyl cellulose and a high-viscosity ethyl cellulose.

That is, the ethyl cellulose is a substance that is inert to the oxide semiconductor fine particles such as titanium dioxide fine particles, and that can be decomposed and removed by firing without adversely affecting semiconducting properties and shapes of the oxide semiconductor fine particles. Conventional semiconductor pastes are using one kind of ethyl cellulose as the binder component. When applied over large areas, therefore, the semiconductor paste is slackened, the thickness of the coating loses uniformity, which is reflected on the semiconductor porous layer that is formed adversely affecting cell characteristics and making it difficult to express stable characteristics as described already. According to the present invention which uses the two kinds of ethyl celluloses as described above, however, the binder properties do not decrease and the slackening is effectively prevented. Even when applied over a wide area, therefore, the coating maintains a uniform thickness. As a result, the semiconductor porous layer maintains a uniform thickness making it possible to express stable cell characteristics.

Of the above ethyl celluloses, the low-viscosity ethyl cellulose has a particularly high binder function and exhibits a viscosity (25°C) in a range of 5 to 15 cP when it is dissolved in a solvent of toluene at a solid component concentration thereof of 10%. That is, upon being blended with the low-viscosity ethyl cellulose, the oxide semiconductor fine particles are held in the semiconductor paste in a homogeneously dispersed state without aggregating. Further, even after the semiconductor paste is applied and the solvent (terpineol) is removed by heating and drying, the lamella state is stably maintained in which the two kinds of oxide semiconductor fine particles A and B are stacked one upon the other.

On the other hand, the high-viscosity ethyl cellulose has the above binder function to some extent but is used, particularly, for improving rheology, and exhibits a viscosity (25°C) in a range of 30 to 50 cP when it is dissolved in a solvent of toluene at a solid component concentration thereof of 10%. That is, upon being blended with the high-viscosity ethyl cellulose, the semiconductor paste preferably used in the invention does not impair the binder function of the low-viscosity ethyl cellulose, is effectively prevented from being slackened, suppresses variation in the thickness of the coating even when it is applied over a large area, making it possible to maintain uniform the thickness of the coating and, therefore, to form the semiconductor porous layer of a large area maintaining a uniform thickness.

It is desired that the semiconductor paste contains the low-viscosity ethyl cellulose and the high-viscosity ethyl cellulose in a total amount of 5 to 60% by weight and, particularly, 5 to 30% by weight. If the above total amount lies outside the above range, a balance is lost between the oxide semiconductor fine particles and the terpineol inviting such an inconvenience that the oxide semiconductor fine particles are dispersed lacking stability, the semiconductor paste cannot be favorably applied or properties of the formed semiconductor porous layer are adversely affected.

It is, further, desired that the low-viscosity ethyl cellulose (ES¹) and the high-viscosity ethyl cellulose (ES²) are blended at a weight ratio ES¹/ES² of 51/49 to 80/20 and, particularly, 55/45 to 70/30 from the standpoint of effectively expressing the binder function of the low-viscosity ethyl cellulose and the rheology-improving function of the high-viscosity ethyl cellulose. That is, if the low-viscosity ethyl cellulose is used in amounts larger than the above range, the effect for preventing the slacking may decrease. If the high-viscosity ethyl cellulose is used in amounts larger than the above range, on the other hand, the binder function is lost and the oxide semiconductor fine particles aggregate. Further, when the solvent is removed from the semiconductor paste after it is applied, the lamella structure of the oxide semiconductor fine particles is easily impaired often making it difficult to form the semiconductor porous layer having a constant thickness.

To the semiconductor paste, there can be added various kinds of additives such as leveling agent, surfactant and viscosity-imparting agent in suitable amounts so far as they do not adversely affect the prevention of slacking or semiconducting properties of the oxide semiconductor fine particles. Namely, the semiconductor paste is prepared upon being mixed with the above various components and other additives that are suitably used. Though there is no limitation on the order of adding the components, it is desired to set the amounts of use of the components within the above-mentioned ranges of ratios so that the viscosity (25°C) of the paste lies in the range of about 15 to about 50 cP.

The above semiconductor paste does not undergo slacking even when it is applied onto a large area; i.e., the semiconductor paste can be favorably applied by screen printing.

The semiconductor paste has properties suited for being screen-printed and can, therefore, be used for forming a known semiconductor porous layer, too. That is, a semiconductor paste obtained by using one kind of oxide fine particles (e.g., titanium dioxide fine particles) instead of using the above oxide semiconductor fine particles A and B, and dispersing the one kind of oxide fine particles in the terpineol, low-viscosity ethyl cellulose and high-viscosity ethyl cellulose, can be used for forming a semiconductor porous layer 60 of a structure shown in Fig. 3. In this case, too, the semiconductor porous layer 60 of a large area having a uniform thickness can be formed by screen printing.

### <Production of electrode substrate>

As described above, the semiconductor porous layer 50 of the structure shown in Fig. 2 is formed by applying the semiconductor paste containing the above two kinds of oxide semiconductor fine particles A and B onto the surface of the electrode substrate 51 to form a coating thereof, and by having the sensitizing dye 53 carried thereby. The electrode substrate 51 forming the semiconductor porous layer 50 sensitized with the dye is put to use for dye-sensitized solar cells.

That is, the above semiconductor paste can be applied by a known method and is, particularly preferably, applied by the screen printing method, since it is effectively prevented from slackening. Thus, the semiconductor porous layer 50 having a uniform thickness can be efficiently formed even on the electrode substrate 51 of a large area.

The coating of a semiconductor paste is fired at a temperature which does not deteriorate semiconducting properties or lamella structure of the oxide semiconductor fine particles such as titanium dioxide fine particles, e.g., at 350 to 550°C for about 30 to about 60 minutes. Thus, the solvent volatilizes and the oxide semiconductor fine particles are sintered together to form the semiconductor porous layer.

The sensitizing dye 53 is carried by bringing a dye solution into contact with the semiconductor porous layer. Namely, the semiconductor porous layer 50 is formed carrying the sensitizing dye 53 which infiltrates deep into the interior thereof, and the electrode substrate 51 is obtained having the semiconductor porous layer 50 of the structure shown in Fig. 2.

The dye solution is contacted, usually, by dipping, and the adsorption-treating time (dipping time) is, usually, about 30 minutes to about 24 hours. After adsorbed, the solvent of the dye solution is removed by drying so that the sensitizing dye 53 infiltrates deep into the interior so as to be carried. That is, according to the invention, the semiconductor porous layer 50 forms many macro pores of predetermined sizes and, further, has a large voidage. Upon bringing the dye solution into contact therewith as described above, therefore, the sensitizing dye 53 can be carried not only in the surface portions but also deep in the interior homogeneously to ensure a high conversion efficiency.

The sensitizing dye that is used is a known one having a bonding group such as carboxylate group, cyano group, phosphate group, oxime group, dioxime group, hydroxyquinoline group, salicylate group or α-keto-enol group. Namely, those disclosed in the above patent documents 1 to 3 can be used without any limitation, such as ruthenium complex, osmium complex and iron complex. Particularly preferably, ruthenium complex can be used, such as ruthenium-tris(2,2'-bispyridyl-4,4'-dicarboxylato) or ruthenium-cis-diaqua-bis(2,2'-bispyridyl-4,4'-dicarboxylato ). The dye solutions of these sensitizing dyes are prepared by using, as a solvent, an alcohol-type organic solvent such as ethanol or butanol, and have dye concentrations of about 3 x 10⁻⁴ to about 5 x 10⁻⁴ mols/l.

The thus obtained electrode substrate 51 is opposed to the opposing electrode holding an electrolyte layer therebetween, and is used as a dye-sensitized solar cell.

### <Dye-sensitized solar cell>

According to the invention, the electrode substrate 51 forming the above semiconductor porous layer 50 can be preferably used as the cathode substrate 10 of the structure shown in Fig. 1 which is capable of, particularly, suppressing an increase in the internal resistance caused by an increase in the size of the cell. The cathode substrate 10 arranged to be opposed to the anode substrate (transparent electrode substrate) 1 holding the electrolyte layer 20 therebetween, can be used as the dye-sensitized solar cell. That is, the cathode substrate 10 has the porous semiconductor layer 50 of the above structure (the semiconductor porous layer is designated at 13 in Fig. 1) formed on the metal substrate 11 via the reverse-electron blocking layer 15 that is formed as required.

In the dye-sensitized solar cell of this structure, there is no particular limitation on the metal substrate 11 if it is made of a metal material having a low electric resistance. Usually, there is used a metal or an alloy having a resistivity of not higher than 6 x 10⁻⁶ Ω · m, such as aluminum, iron (steel), stainless steel, copper or nickel. There is no particular limitation on the thickness of the metal substrate 11; i.e., the metal substrate 11 may have a thickness which maintains a suitable degree of mechanical strength. If productivity is not taken into account, the metal substrate 11 may have a resin film or the like film formed thereon by, for example, vacuum evaporation. The material of the resin film does not have to be transparent, as a matter of course.

In the above metal substrate 11, the dye-sensitized semiconductor porous layer 50 (13) is formed on a portion that serves as a power generation region X, and the circumference thereof that does not take part in the power generation becomes a sealing region Y.

The reverse-current blocking layer 15 suitably formed on the surface of the metal substrate 11 works as a rectifier barrier and suppresses the current that reversely flows from the metal substrate 11 into the dye-sensitized semiconductor porous layer 50(13). The reverse-electron blocking layer 15 is formed of a metal or a metal oxide (e.g., titanium dioxide, etc.) having a resistance higher than that of the metal substrate 11 or is formed of a conversion-treated film disclosed in JP-A-2008-53165, and has a thickness of, usually, about 5 to about 500 nm.

The transparent electrode substrate (anode substrate) 1 arranged opposing the cathode substrate 10 formed as described above, is obtained by forming a transparent conducting film 5 on a transparent substrate 3.

A transparent glass plate or a transparent resin film is used as the transparent substrate 3. Any transparent resin film can be used so far as it is transparent. For example, there can be used a film comprising a polyolefin resin such as a random or block copolymer of α-olefins like low-density polyethylene, high-density polyethylene, polypropylene, poly 1-butene, poly 4-methyl-1-pentene, ethylene, propylene, 1-buene or 4-methyl-1-pentene; an ethylene/vinyl compound copolymer resin such as ethylene/vinyl acetate copolymer, ethylene/vinyl alcohol copolymer or ethylene/vinyl chloride copolymer; a styrene resin such as polystyrene, acrylonitrile/styrene copolymer, ABS or α-methylstyrene/styrene copolymer; a vinyl resin such as polyvinyl alcohol, polyvinyl pyrrolidone, polyvinyl chloride, polyvinylidene chloride, vinyl chloride/vinylidene chloride copolymer, polyacrylic acid, polymethacrylic acid, methyl polyacrylate or methyl polymethacrylate; a polyamide resin such as nylon 6, nylon 6-6, nylon 6-10, nylon 11 or nylon 12; a polyester resin such as polyethylene terephthalate or polybutylene terephthalate; polycarbonate; polyphenylene oxide; cellulose derivative such as carboxymethyl cellulose or hydroxyethyl cellulose; starch such as starch oxide, etherified starch or dextrin; and a resin of a mixture thereof. Usually, a polyethylene terephthalate film is preferably used from the standpoint of strength and heat resistance. There is no particular limitation on the thickness and size of the transparent substrate 3 which, therefore, are suitably determined depending on the use of the dye-sensitized solar cell that is finally used.

The transparent conducting film 5 can be represented by a film comprising an indium oxide/tin oxide alloy (ITO film) and a film obtained by doping tin oxide with fluorine (FTO film) . The ITO film, however, is particularly preferred because of its low electric resistance. The film is formed on the transparent conducting film 3 by vacuum evaporation and has a thickness of, usually, about 0.5 to about 0.7 µm.

An electron-reducing conducting layer 7 is suitably formed on the surface of the transparent conducting film 5. The electron-reducing conducting layer 7, usually, comprises a thin platinum layer and works to quickly transfer the electrons that have flown into the transparent conducting film 5 to the electrolyte layer 20. The electron-reducing conducting layer 20 is thinly formed by vacuum evaporation so as to possess an average thickness of about 0.1 to about 1.5 nm so will not to impair light transmission property.

The cathode substrate 10 and the transparent electrode substrate (anode substrate) 1 formed as described above are opposed to each other holding the electrolyte layer 20 therebetween, and the power generation region X is formed by the dye-sensitized semiconductor porous layer 50 (13) of the above structure and the electrolyte layer 20.

The electrolyte layer 20 is formed by using various electrolytic solutions containing cations such as lithium ions and anions such as chlorine ions like the known solar cells. It is, further, desired that an oxidation-reduction pair capable of reversibly assuming an oxidation type structure and a reduction type structure is made present in the electrolyte 20. As the oxidation-reduction pair, there can be exemplified iodine-iodine compound, bromine-bromine compound and quinone-hydroquinone.

The electrolyte layer 20 is sealed with the sealing member 30 provided in the sealing region Y surrounding the power generation region X preventing the leakage of liquid from between the electrodes. The thickness of the electrolyte layer 20 varies depending upon the size of the cell that is finally formed but is, usually, about 10 to about 50 µm.

As the sealing member 30, there can be used various thermoplastic resins or thermoplastic elastomers that can be heat-sealed as represented by a polyolefin resin such as a random or block copolymer of α-olefins like low-density polyethylene, high-density polyethylene, polypropylene, poly 1-butene, poly 4-methyl-1-pentene, ethylene, propylene, 1-buene or 4-methyl-1-pentene; an ethylene/vinyl compound copolymer resin such as ethylene/vinyl acetate copolymer, ethylene/vinyl alcohol copolymer or ethylene/vinyl chloride copolymer; a styrene resin such as polystyrene, acrylonitrile/styrene copolymer, ABS or α-methylstyrene/styrene copolymer; a vinyl resin such as polyvinyl alcohol, polyvinyl pyrrolidone, polyvinyl chloride, polyvinylidene chloride, vinyl chloride/vinylidene chloride copolymer, polyacrylic acid, polymethacrylic acid, methyl polyacrylate or methyl polymethacrylate; a polyamide resin such as nylon 6, nylon 6-6, nylon 6-10, nylon 11 or nylon 12; a polyester resin such as polyethylene terephthalate, polybutylene terephthalate or polyethylene naphthalate; polycarbonate; polyphenylene oxide; cellulose derivative such as carboxymethyl cellulose or hydroxyethyl cellulose; starch such as starch oxide, etherified starch or dextrin; and a resin of a mixture thereof.

The sealing member 30 is formed by extrusion-molding or injection-molding the above thermoplastic resin into the shape of, for example, a ring of a width corresponding to the sealing region Y. Upon heat-sealing (heat-press-adhering) the cathode substrate 10 and the transparent electrode substrate 1 arranged facing each other with the sealing member 30 being held therebetween, the cathode substrate 10 and the transparent electrode substrate 1 are joined together. Next, an injection pipe is inserted in the sealing member 30, and an electrolytic solution for forming the electrolyte layer 20 is injected into a space between the two electrode substrates through the injection pipe to obtain a dye-sensitized solar cell of the structure shown in Fig. 1 equipped with an electrode substrate that has the dye-sensitized semiconductor porous layer 50 (13) of the structure shown in Fig. 2.

When a transparent resin film or the like is used as the transparent substrate 3, the dye-sensitized solar cell of the structure shown in Fig. 1 can be produced even by sealing the three sides of the cathode substrate 10 and of the transparent electrode substrate 1 with the sealing agent 30, injecting the electrolytic solution through an opening that has not been sealed, and finally completely sealing the opening with the sealing agent 30.

In the thus formed dye-sensitized solar cell, as described earlier, if visible light falls on the side of the transparent electrode substrate 1, the dye in the dye-sensitized semiconductor porous layer 50 (13) formed in the cathode substrate 10 is excited and is transited from the ground state to the excited state. Electrons of the excited dye are injected into the conduction band of the porous layer 50(13), and migrate to the transparent electrode substrate 1 via the metal electrode substrate 10 (metal substrate 11) and through an external circuit (not shown). The electrons that have migrated to the transparent electrode substrate 1 return back to the dye being carried by ions in the electrolyte layer 20. The electric energy is taken out through the repetition of the above process, and the electric power is generated. According to the invention, the sensitizing dye 5 is deeply and homogeneously distributed in the semiconductor porous layer 50 (13) and is adsorbed and carried therein. Due to scattering, further, light spreads in the semiconductor porous layer 50 (13) having large voids, and a high conversion efficiency is obtained. Even when the power generation region X has a large area, further, the semiconductor porous layer 50(13) maintains a uniform thickness without slacking, and stable characteristics are exhibited.

In the foregoing was described the electrode substrate forming the semiconductor porous layer 50 according to the present invention, that was used as the cathode substrate 10 of the dye-sensitized solar cell of the structure shown in Fig. 1. Not being limited to the above embodiment only, however, the electrode substrate of the invention may be, for example, such that the dye-sensitized semiconductor porous layer 50 is formed on the transparent conducting film 5 (or the electron-reducing conducting layer 7) in the dye-sensitized solar cell of the structure shown in Fig. 1, and the electrode substrate of the invention may, as a matter of course, be used as the cathode substrate arranged on the side on where light falls.

### EXAMPLES

Excellent effects of the invention will now be described by way of Examples.

### (Example 1)

There were prepared the following two kinds of titanium dioxide fine particles as oxide semiconductor fine particles and two kinds of binder agents (low-viscosity ethyl cellulose and high-viscosity ethyl cellulose). The ethyl celluloses which are the binder agents were measured for their viscosities by using a B type viscometer and using toluene solutions of an ethyl cellulose solid content concentration of 10% by weight at 25°C.
Spherical titanium dioxide fine particles (A):
F Series manufactured by Showa Titanium Co.
Particle diameter: 30 nm
Irregular titanium dioxide fine particles (B):
AMT Series manufactured by Teika Co.
Particle diameter: 7 nm
Low-viscosity ethyl cellulose (ES¹):
Viscosity: 5 to 15 cP
High-viscosity ethyl cellulose (ES²)
Viscosity: 30 to 50 cP

A semiconductor paste of the following composition was prepared by using the above oxide semiconductor fine particles and ethyl celluloses and using terpineol as the organic solvent. Composition of the semiconductor paste:
Spherical titanium dioxide fine particles A: 15% by weight
Irregular titanium dioxide fine particles B: 5% by weight
   (A/B = 3)
Low-density ethyl cellulose (ES¹): 4.4% by weight
High-density ethyl cellulose (ES²): 5.6% by weight (ES¹/ES² = 11/14)
Terpineol: 70% by weight

Next, an aluminum plate (0.3 mm thick) treated with chromic phosphate was provided as a metal substrate. The paste prepared above was applied onto the aluminum plate, and fired at 450°C for 30 minutes to form a semiconductor porous layer having a thickness of about 10 µm. In applying the paste, no slackening occurred at all. The obtained semiconductor layer was measured for its thickness distribution over a square area of a side of 1 cm to find that the thickness error was in a range of ±0.2 µm featuring a nearly uniform thickness.

The oxide semiconductor layer was put to the BET measurement of the nitrogen adsorption/desorption type to confirm a maximum peak of pore volume in a portion of a pore diameter of about 50 nm. Further, the voidage in the layer was calculated to be 69%.

Further, the semiconductor porous layer was dipped in a dye solution obtained by dispersing a ruthenium complex dye in an ethanol of a purity of 99.5% for 24 hours, and was dried to obtain a cathode substrate having the semiconductor porous layer sensitized with the dye. The ruthenium complex dye that was used is expressed by the following formula,

[Ru(dcbpy)₂(NCS)₂] ·2H₂O

There was, further, provided an opposing electrode (anode) substrate constituted by an ITO/PEN film on which platinum was deposited by vacuum evaporation.

An electrolytic solution was held between the opposing electrode substrate and the cathode structure prepared above to produce the dye-sensitized solar cell of the structure shown in Fig. 1. The thickness of the electrolyte layer was 5 µm.

The electrolytic solution that was used was the one obtained by dissolving DMPImI/LiI/I₂ (0.6 mols/0.5 mols/0.025 mols) in methoxypropionitrile to which was, further, added 4-tert-butylpyridine.

The obtained cell was measured for its conversion efficiency over an area of 1 cm². A high conversion efficiency was obtained as described below.
Conversion efficiency: 5.08%
FF (internal resistance): 0.57
J_{sc} (short-circuit current density): 12.9 mA/cm²
V_{oc} (open-circuit voltage): 0.69 V

### (Comparative Example 1)

A TiO₂ paste was prepared in quite the same manner as in Example 1 with the exception of using the spherical titanium dioxide fine particles (A) only but without using irregular titanium dioxide fine particles (B). By using this paste, a semiconductor porous layer of a thickness of about 8 µm was formed in quite the same manner as in Example 1. The thickness of the semiconductor porous layer was uniform like that of Example 1.

The semiconductor porous layer was put to the BET measurement of the nitrogen adsorption/desorption type to confirm a maximum peak of pore volume in a portion of a pore diameter of about 20 nm. Further, the voidage in the layer was calculated to be 59%.

Next, by using an aluminum plate having the above semiconductor porous layer formed on the surface thereof, a dye was carried in quite the same manner as in Example 1. By using this aluminum plate as the cathode substrate, a dye-sensitized solar cell of the structure shown in Fig. 1 was produced.

The obtained cell was measured for its conversion efficiency over an area of 1 cm². The conversion efficiency was lower than that of Example 1, and was as described below.
Conversion efficiency: 3.20%
FF (internal resistance): 0.61
J_{sc} (short-circuit current density): 7.64 mA/cm²
V_{oc} (open-circuit voltage): 0.69 V

### (Comparative Example 2)

A TiO₂ paste was prepared in quite the same manner as in Comparative Example 1 with the exception of using the low-viscosity ethyl cellulose (ES¹) only as the binder agent but without using the high-viscosity ethyl cellulose (ES²). By using this paste, a semiconductor porous layer of a thickness of about 10 µm was formed in quite the same manner as in Example 1. The semiconductor porous layer was measured for its thickness distribution over a square area of a side of 1 cm to find that the thickness error was in a range of ±1 µm and was far from the uniform layer thickness.

Next, by using an aluminum plate having the above semiconductor porous layer formed on the surface thereof, a dye was carried in quite the same manner as in Example 1. By using this aluminum plate as the cathode substrate, a dye-sensitized solar cell of the structure shown in Fig. 1 was produced.

The obtained cell was measured for its conversion efficiency over an area of 1 cm². The conversion efficiency was lower than that of Example 1, and was as described below.
Conversion efficiency: 3.20%
FF (internal resistance): 0.61
J_{sc} (short-circuit current density): 7.64 mA/cm²
V_{oc} (open-circuit voltage): 0.69 V

## Claims

1. An electrode substrate for a dye-sensitized solar cell equipped with a semiconductor porous layer that carries a sensitizing dye, wherein:
said semiconductor porous layer includes a mixture of titanium dioxide semiconductor fine particles (A) having spherical shapes, i.e. shapes having no corners for forming planes and titanium dioxide semiconductor fine particles (B) having irregular shapes and particle diameters smaller than those of said fine particles (A), and has a voidage of not less than 60%, and in which a maximum peak of pore volume in said semiconductor porous layer as measured by a BET method is present in a region of pore diameters of not smaller than 30 nm;
said titanium dioxide semiconductor fine particles (A) have particle diameters in a range of 5 to 100 nm, and said titanium dioxide semiconductor fine particles (B) have particle diameters in a range of 1 to 80 nm; and
said semiconductor porous layer contains said titanium dioxide semiconductor fine particles (A) and said titanium dioxide semiconductor fine particles (B) at a weight ratio A/B of 10/90 to 90/10.

2. A dye-sensitized solar cell including the electrode substrate of claim 1 and an opposing substrate opposed to the side of the semiconductor porous layer of said electrode substrate holding an electrolyte layer therebetween.

3. A method of producing an electrode substrate for a dye-sensitized solar cell, including:
a step of preparing a semiconductor paste by dispersing oxide semiconductor fine particles in an organic solvent;
a step of applying said semiconductor paste onto one surface of the electrode substrate;
a step of forming a semiconductor porous layer by firing a layer of the semiconductor paste that is applied; and
a step of having a dye carried by said semiconductor porous layer; wherein
said semiconductor paste that is used is obtained by dispersing titanium dioxide semiconductor fine particles (A) having spherical shapes and titanium dioxide semiconductor fine particles (B) having irregular shapes and particle diameters smaller than those of said titanium dioxide semiconductor fine particles (A) in an organic solvent, the organic solvent containing terpineol and two kinds of ethyl celluloses that exhibit different viscosities when dissolved in a solvent; wherein:
said titanium dioxide semiconductor fine particles (A) have particle diameters in a range of 5 to 100nm, and said titanium dioxide semiconductor fine particles (B) have particle diameters in a range of 1 to 80 nm; and
said paste contains said titanium dioxide semiconductor fine particles (A) and said titanium dioxide semiconductor fine particles (B) at a weight ratio A/B of 10/90 to 90/10.

4. The method of production according to claim 3, wherein said semiconductor paste contains the oxide semiconductor fine particles (A) and the oxide semiconductor fine particles (B) in a total amount of 5 to 60% by weight, contains said terpineol in an amount of 10 to 90% by weight, and contains said two kinds of ethyl celluloses in a total amount of 5 to 60% by weight.

5. The method of production according to claim 3, wherein said two kinds of ethyl celluloses that are used are a low-viscosity ethyl cellulose having a viscosity of 5 to 15 cP and a high-viscosity ethyl cellulose having a viscosity of 30 to 50 cP as measured as solutions of a solid component concentration thereof of 10% by weight at 25°C with toluene as a solvent.

6. The method of production according to claim 5, wherein said semiconductor paste contains the low-viscosity ethyl cellulose (ES¹) and the high-viscosity ethyl cellulose (ES²) at a weight ratio ES¹/ES² of 51/49 to 80/20.

## Patentansprüche

1. Elektrodensubstrat für eine Farbstoffsolarzelle, das mit einer porösen Halbleiterschicht ausgestattet ist, die einen sensibilisierenden Farbstoff trägt, worin:
die genannte poröse Halbleiterschicht Folgendes einschließt: eine Mischung aus Titandioxid-Halbleiterfeinpartikeln (A), die sphärische Formen besitzen, d. h. Formen ohne Ecken, zur Bildung von Ebenen und Titandioxid-Halbleiterfeinpartikeln (B), die unregelmäßige Formen besitzen und Partikeldurchmesser aufweisen, die kleiner als die der genannten Feinpartikel (A) sind, und einen Hohlraum von nicht weniger als 60 % aufweist und in der ein maximaler Höchstwert des Porenvolumens in der genannten porösen Halbleiterschicht, wie durch ein BET-Verfahren gemessen wird, in einem Porendurchmesserbereich von nicht kleiner als 30 nm liegt;
die genannten Titandioxid-Halbleiterfeinpartikel (A) Partikeldurchmesser in einem Bereich von 5 bis 100 nm aufweisen und die genannten Titandioxid-Halbleiterfeinpartikel (B) Partikeldurchmesser in einem Bereich von 1 bis 80 nm aufweisen; und
die genannte poröse Halbleiterschicht die genannten Titandioxid-Halbleiterfeinpartikel (A) und die genannten Titandioxid-Halbleiterfeinpartikel (B) in einem Gewichtsverhältnis A/B von 10/90 bis 90/10 enthält.

2. Farbstoffsolarzelle, die das Elektrodensubstrat nach Anspruch 1 und ein gegenüberliegendes Substrat einschließt, das der Seite der porösen Halbleiterschicht des genannten Elektrodensubstrats gegenüberliegt, die eine Elektrolytschicht dazwischen enthalten.

3. Verfahren zur Herstellung eines Elektrodensubstrats for eine Farbstoffsolarzelle, das Folgendes einschließt:
einen Schritt des Herstellens einer Halbleiterpaste durch Dispergieren von Oxid-Halbleiterfeinpartikeln in einem organischen Lösungsmittel;
einen Schritt des Auftragens der genannten Halbleiterpaste auf eine Oberfläche des Elektrodensubstrats;
einen Schritt des Bildens einer porösen Halbleiterschicht durch Brennen einer Schicht der Halbleiterpaste, die aufgetragen wird; und
einen Schritt des Übertragens eines Farbstoffs auf die genannte poröse Halbleiterschicht; worin
die genannte Halbleiterpaste, die verwendet wird, durch Dispergieren von Titandioxid-Halbleiterfeinpartikeln (A) mit spherischen Formen und Titandioxid-Halbleiterfeinpartikeln (B) mit unregelmäßigen Formen und Partikeldurchmessern, die kleiner sind als die der genannten Titandioxid-Halbleiterfeinpartikel (A), in einem organischen Lösungsmittel erhalten wird, wobei das organische Lösungsmittel Terpineol und zwei Arten Ethylcellulose, die unterschiedliche Viskositäten beim Lösen in einem Lösungsmittel zeigen, enthält;
worin:
die genannten Titandioxid-Halbleiterfeinpartikel (A) Partikeldurchmesser im Bereich von 5 bis 100 nm aufweisen und die genannten Titandioxid-Halbleiterfeinpartikel (B) Partikeldurchmesser im Bereich von 1 bis 80 nm aufweisen; und
die genannte Paste die genannten Titandioxid-Halbleiterfeinpartikel (A) und die genannten Titandioxid-Halbleiterfeinpartikel (B) in einem Gewichtsverhältnis A/B von 10/90 bis 90/10 enthält.

4. Verfahren zur Herstellung nach Anspruch 3, worin die genannte Halbleiterpaste die Oxid-Halbleiterfeinpartikel (A) und die Oxid-Halbleiterfeinpartikel (B) in einer Gesamtmenge von 5 bis 60 Gewicht-% enthält, das genannte Terpineol in einer Menge von 10 bis 90 Gewichts-% enthält und die genannten zwei Arten von Ethylcellulose in einer Gesamtmenge von 5 bis 60 Gewichts-% enthält.

5. Verfahren zur Herstellung nach Anspruch 3, worin die genannten zwei Arten von Ethylcellulose, die verwendet werden, eine niedrigviskose Ethylcellulose mit einer Viskosität von 5 bis 15 cP und eine hochviskose Ethylcellulose mit einer Viskosität von 30 bis 50 cP sind, wie als Lösungen einer Konzentration der festen Komponente davon von 10 Gewichts-% bei 25°C mit Toluol als Lösungsmittel gemessen wird.

6. Verfahren zur Herstellung nach Anspruch 5, worin die genannte Halbleiterpaste die niedrigviskose Ethylcellulose (ES¹) und die hochviskose Ethylcellulose (ES²) in einem Gewichtsverhältnis ES¹/ES² von 51/49 bis 80/20 enthält.

## Revendications

1. Un substrat d'électrode pour une cellule solaire à pigment photosensible équipée d'une couche poreuse semiconductrice qui contient un pigment photosensible, où :
ladite couche poreuse semiconductrice contient un mélange de particules fines semiconductrices de dioxyde de titane (A) possédant des formes sphériques, c'est-à-dire des formes ne possédant pas d'angles de façon à former des plans, et des particules fines semiconductrices de dioxyde de titane (B) possédant des formes irrégulières et des diamètres de particule inférieurs à ceux desdites particules fines (A), et possède une porosité d'au moins 60%, et une crête maximale de volume de pore dans ladite couche poreuse semiconductrice telle que mesurée par un procédé BET étant présente dans une zone de diamètres de pore d'au moins 30 nm,
lesdites particules fines semiconductrices de dioxyde de titane (A) possèdent des diamètres de particule dans une plage de 5 à 100 nm, et lesdites particules fines semiconductrices de dioxyde de titane (B) possèdent des diamètres de particule dans une plage de 1 à 80 nm, et
ladite couche poreuse semiconductrice contient lesdites particules fines semiconductrices de dioxyde de titane (A) et lesdites particules fines semiconductrices de dioxyde de titane (B) dans un rapport de poids A/B de 10/90 à 90/10.

2. Une cellule solaire à pigment photosensible comprenant le substrat d'électrode selon la Revendication 1 et un substrat opposé situé à l'opposé du côté de la couche poreuse semiconductrice dudit substrat d'électrode qui maintiennent une couche d'électrolyte entre ceux-ci.

3. Un procédé de production d'un substrat d'électrode pour une cellule solaire à pigment photosensible, comprenant :
une opération de préparation d'une pâte semiconductrice par la dispersion de particules fines semiconductrices d'oxyde dans un solvant organique,
une opération d'application de ladite pâte semiconductrice sur une surface du substrat d'électrode,
une opération de formation d'une couche poreuse semiconductrice par la cuisson d'une couche de la pâte semiconductrice qui est appliquée, et
une opération d'insertion d'un pigment dans ladite couche poreuse semiconductrice, où
ladite pâte semiconductrice qui est utilisée est obtenue par la dispersion de particules fines semiconductrices de dioxyde de titane (A) possédant des formes sphériques et de particules fines semiconductrices de dioxyde de titane (B) possédant des formes irrégulières et des diamètres de particule inférieurs à ceux desdites particules fines semiconductrices de dioxyde de titane (A) dans un solvant organique, le solvant organique contenant du terpinéol et deux types d'éthylcelluloses qui présentent des viscosités différentes lorsqu'elles sont dissoutes dans un solvant, où :
lesdites particules fines semiconductrices de dioxyde de titane (A) possèdent des diamètres de particule dans une plage de 5 à 100 nm et lesdites particules fines semiconductrices de dioxyde de titane (B) possèdent des diamètres de particule dans une plage de 1 à 80 nm, et
ladite pâte contient lesdites particules fines semiconductrices de dioxyde de titane (A) et lesdites particules fines semiconductrices de dioxyde de titane (B) dans un rapport de poids A/B de 10/90 à 90/10.

4. Le procédé de production selon la Revendication 3, où ladite pâte semiconductrice contient les particules fines semiconductrices d'oxyde (A) et les particules fines semiconductrices d'oxyde (B) dans une quantité totale de 5 à 60% en poids, contient ledit terpinéol dans une quantité de 10 à 90% en poids et contient lesdits deux types d'éthylcelluloses dans une quantité totale de 5 à 60% en poids.

5. Le procédé de production selon la Revendication 3, où lesdits deux types d'éthylcelluloses qui sont utilisées sont une éthylcellulose à faible viscosité possédant une viscosité de 5 à 15 cP et une éthylcellulose à haute viscosité possédant une viscosité de 30 à 50 cP telle que mesurée sous la forme de solutions d'une concentration de composant solide de celles-ci de 10% en poids à 25°C avec du toluène en tant que solvant.

6. Le procédé de production selon la Revendication 5, où ladite pâte semiconductrice contient de l'éthylcellulose à faible viscosité (ES¹) et de l'éthylcellulose à haute viscosité (ES²) dans un rapport de poids ES¹/ES² de 51/49 à 80/20.
